# EUROPÄISCHE PATENTSCHRIFT

(11) **EP 2 802 817 B1**
(45) Veröffentlichungstag und Bekanntmachung des Hinweises auf die Patenterteilung: **20.09.2017**
(21) Anmeldenummer: 12815999.3
(22) Anmeldetag: 21.12.2012
(51) Int. Cl.: F23G 5/50

(54) **VERFAHREN UND VORRICHTUNG ZUR VERBESSERUNG DES AUSBRANDES VON SCHLACKEN AUF VERBRENNUNGSROSTEN**
METHOD AND DEVICE FOR IMPROVING THE BURN-OUT OF SLAGS ON INCINERATION GRATES
PROCÉDÉ ET DISPOSITIF POUR AMÉLIORER LA COMBUSTION DE SCORIES SUR DES GRILLES DE COMBUSTION

(30) Priorität: 10.01.2012 DE 102012000262
(43) Veröffentlichungstag der Anmeldung: 19.11.2014
(73) Patentinhaber: Krüger, Jörg, 92421 Schwandorf (DE)
(72) Erfinder: KRÜGER, Sascha, 99438 Bad Berka (DE); KRÜGER, Jörg, Dr., 92421 Schwandorf (DE)
(74) Vertreter: Flaccus, Rolf-Dieter
(86) Internationale Anmeldenummer: PCT/EP2012/005349
(87) Internationale Veröffentlichungsnummer: WO 2013/104407

(56) Entgegenhaltungen:
- EP-A1- 0 498 014
- EP-A1- 1 489 355
- DE-B3-102006 026 434
- US-A- 4 263 857

## Beschreibung

Die vorliegende Erfindung befasst sich mit einem Verfahren und einer Vorrichtung zur Verbesserung des Ausbrandes von in der Regel mit Restbrennstoff versetzten Schlacken auf Verbrennungsrosten, insbesondere bei Absenkung des spezifischen Primärluftbedarfs.

Bei der Verbrennung von Brennstoffen zur Erzeugung von Dampf wird ein möglichst geringer Luftüberschuss angestrebt, um über geringere Abgasmengen hohe Feuerungswirkungsgrade zu erreichen.
Bei flüssigen, gas- oder pulverförmigen Brennstoffen ist diese Anforderung über die Wahl der Brenner technisch gelöst. Sauerstoffkonzentrationen im Abgas von 2 - 3 Vol-% bei vollständigem Ausbrand der Abgase sind üblich.

Die Verbrennung von Müll, Ersatzbrennstoffen, Biomassen und anderen grobstückigen oder sehr inhomogenen Brennstoffen erfolgt bevorzugt auf Rostanlagen in den Verbrennungskesseln. In diesen Verbrennungsanlagen sind üblicherweise deutlich höhere Sauerstoffkonzentrationen im Abgas notwendig, um den Ausbrand der Rauchgase und der Schlacke sicherzustellen. Aus diesem Grund war in der 17. BImSchV bis zum Jahr 2009 unter § 4 [1] festgelegt, dass der Mindestsauerstoffgehalt im Rauchgas in der Ausbrandzone größer als 6 % sein muss.
Um diesen Grenzwert sicher einzuhalten, mussten Verbrennungsanlagen in der Praxis häufig mit mindestens 7 - 8 Vol-% Sauerstoff im Abgas betrieben werden.

Aufgrund der daraus resultierenden schlechten Feuerungswirkungsgrade und der Verbesserung der Verbrennungstechnik hat der Gesetzgeber seit dem Jahr 2009 diesen Sauerstoffgrenzwert von 6 % in der 17. BImSchV ersatzlos gestrichen. Damit wurde die grundsätzliche Möglichkeit geschaffen, den Feuerungswirkungsgrad zu verbessern. Der vollständige Ausbrand der Verbrennungsgase wurde durch verschiedene Vorrichtungen auch bei abgesenkten Sauerstoffkonzentrationen sicher gewährleistet.
Zu diesen Vorrichtungen gehörte als erstes die Rauchgasrezirkulation, wie sie z. B. in DE 10 2004 037 442 A1 beschrieben wird. Bei der Rauchgasrezirkulation wird der Einblasimpuls des rückgeführten Rauchgases zur Vermischung des Rauchgases im Eintrittsbereich zum 1. Strahlungszug genutzt.

Andere Dokumente, wie z. B. EP 0 607 210 B1, befassen sich mit einer Technik, bei welcher der Impuls von Dampf zum Ersatz von Sekundärluft zur Vermischung der Rauchgase eingesetzt wird.

In DE 37 16 088 A1, DE 44 01 821 A1 und DE 10 2004 008 453 A1 werden Vorrichtungen beschrieben, die die Verteilung der Sekundärluft im Eintrittsbereich zum 1. Strahlungszug unterstützen.

Bei der Sicherstellung des Ausbrandes der Schlacke, auch unter dem Begriff "Rostasche" bekannt, helfen die beschriebenen Vorrichtungen nur insofern, als dass ein höherer Anteil der Verbrennungsluft als Primärluft zur Verfügung gestellt wird. Der Betreiber muss häufig entscheiden, in welchem Mengenverhältnis und in welchem Bereich er die notwendige Verbrennungsluft, im Allgemeinen die Primär- und Sekundärluft, der Verbrennung zuführt.

Ein großer Teil der Verbrennungsluft, die Primärluft, wird als Unterwindluft durch den Rost gefördert und soll der Zündung und dem Ausbrand des Brennstoffes auf dem Rost dienen. Um einen maximalen Feuerungswirkungsgrad mit möglichst geringem Verbrennungsluftüberschuss zu erreichen, wird die Luftverteilung unter dem Rost über verschiedenen Zonen vorgenommen. Hierfür wird der Rost häufig mittig halbiert und über der Länge zusätzlich in fünf Unterwindzonen aufgeteilt.

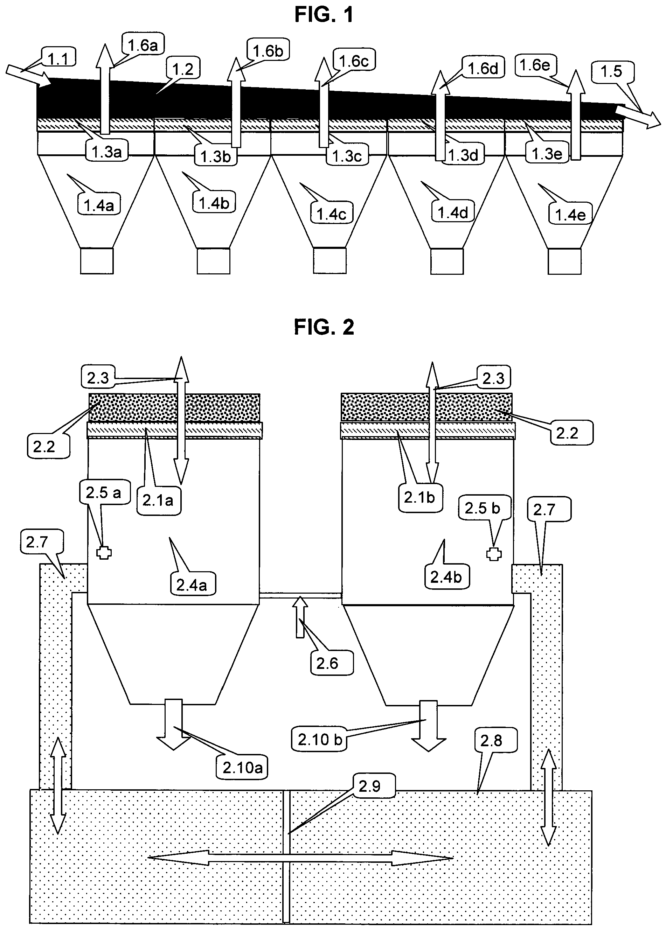

Figur 1 zeigt in Seitenansicht einen Rost mit Brennstoffbelegung und fünf Unterwindzonen. Der Brennstoff 1.1 wird auf die Rostzone 1.3a aufgegeben und für den Ausbrand über den Rost 1.3a - 1.3e gefördert. Die Höhe des Brennstoffbettes 1.2 nimmt mit dem Ausbrand ab. Über die Unterwindzonen 1.4a - 1.4e wird Primärluft 1.6a - 1.6e durch den Rost 1.3a - 1.3e in das Brennstoffbett gefördert. Die ausgebrannte Schlacke 1.5 wird vom Rost in den Entschlacker gefördert.

In der 1. Zone 1.3a wird für die Zündung des Brennstoffes vergleichsweise wenig, häufig vorgewärmte, Luft 1.6a zugeführt, in der 2. und 3. Zone 1.3b und 1.3c findet die Hauptverbrennung statt. Hier wird der größte Teil der Primärluft 1.6b und 1.6c zugeführt.

In den Zonen 4 (1.3d) und 5 (1.3e) ist sicherzustellen, dass der Ausbrand der Schlacke vollständig ist.

In der folgenden Tabelle sind eine typische Verteilung der Primärluft unter dem Rost einer Verbrennungsanlage und die resultierende Luftgeschwindigkeit in Bezug zur projizierten Rostfläche angegeben.

| Unterwindzone | 1 | 2 | 3 | 4 | 5 |
|---|---|---|---|---|---|
| Luftverteilung | 23 % | 51 % | 19 % | 6 % | 1 % |
| Luftgeschwindigkeit | 0,27 m/s | 0,59 m/s | 0,23 m/s | 0,07 m/s | 0,01 m/s |

Eine Luftvorwärmung in den Rostzonen 4 (1.3d) und 5 (1.3d) ist häufig nicht erwünscht, da mit der Luft die Schlacke auf den entsprechenden Rostbereichen gekühlt und damit der Feuerungswirkungsgrad erhöht wird.

In der Schlacke dieser Rostzonen 4 (1.3d) und 5 (1.3e) gibt es vereinzelte Bereiche, in denen unausgebrannte Restbrennstoffe anhand züngelnder Flammen optisch zu erkennen sind. Geringere Glutnester bzw. Brennstoffreste kann man naturgemäß optisch in der Schlacke nicht erkennen.
Da diese Brandnester bzw. unverbrannten Stoffe in der Schlacke im Allgemeinen nur einen kleinen Flächenbereich der Ausbrandzone belegen, wird der größte Teil der dort eingesetzten Primärluft nicht für die Verbrennung genutzt. Dies erklärt plausibel, warum in der Ausbrandzone bilanztechnisch nur geringe Luftmengen eingesetzt werden. Dabei wird nicht berücksichtigt, dass diese spezifisch geringen Luftmengen über geringe Geschwindigkeiten kaum konvektiven Stoff- und Wärmeübergang mit sich bringen und im Bereich der Brandnester zu lokalem Sauerstoffmangel führen.
Die in diesem Beispiel angegebenen geringen Luftgeschwindigkeiten in den Zonen 4 (1.3d) und 5 (1.3e) können insbesondere bei hoher Rostbelastung für schlechten Schlackenausbrand ursächlich sein. Die tatsächlich unausgebrannten Bestandteile der Schlacke werden über Schlackeanalysen bestimmt.

Es wurden mehrere Patente angemeldet, die beschreiben, dass die teilumgesetzte Luft über dem Schlackebett der Ausbrandzone abgesaugt und danach wieder genutzt wird.
In EP 0 498 014 A1 wird diese teilumgesetzte Luft wieder der Primärluft zugeführt.

In EP 01 698 827 A2, WO 2009/065726 A1, US 5,205,227 A1 und US 5,020,456 A1 wird beschrieben, dass diese teilumgesetzte Luft über dem Ausbrandbett der Schlacke abgesaugt und teilweise oder vollständig im oberen Bereich der Strahlungszüge wieder den Rauchgasen zugeführt wird.

Das Dokument US 4263857 offenbart eine Verbrennungsanlage mit mehreren hintereinander angeordneten Rostbereichen, die von unten mit Luft durchströmt werden. Im Anfangsbereich des Rosts befindet sich ein Sauggebläse, welches einen Teil der Brenngase nach unten absaugt. Die abgesaugten Gase werden den Rauchgasen bzw. dem Primärgas (Luft) zugeführt.

DE 10 2006 026 434 B3 offenbart ein Verfahren zur Verbesserung der Schlackequalität einer Rostfeuerungsanlage, welche ein Brennbett mit mehreren hintereinander angeordneten Festbettausbrandzonen auf einem Verbrennungsrost umfasst. Die ersten Zonen (P₁-P₃) werden mit Primärgas durchströmt. Zur Einstellung der Temperatur im Brennbett werden Brenngase aus der Brennkammer abgezweigt und von oben nach unten in mindestens eine nachfolgenden Zone (P₄) geleitet, wodurch ein Rezyklierkreislauf für die heißen Brenngase entsteht. Die Rezyklierung der Brenngase von oben nach unten durch das Brennbett kann mittels eines Umwälzmittels (z. B. Saugvorrichtung oder Heißgasgebläse) erfolgen.

Nachteile der bisher verwendeten Verfahren und Vorrichtungen ist, dass ein optimaler Ausbrand der Schlacke bei einem gleichzeitig optimalen Feuerungswirkungsgrad nicht erreicht wird.

Der vorliegenden Erfindung lag die Aufgabe zugrunde, ein Verfahren und eine Vorrichtung zur Verfügung zu stellen, welche die oben aufgeführten Nachteile überwinden und einen optimalen Ausbrand der Schlacke erreichen.

Die Aufgabe eines optimalen Ausbrandes von Schlacken auf Verbrennungsrosten wird durch ein Verfahren gelöst, bei welchem mindestens ein Luftvolumen aus der Richtung des Verbrennungsraumes oder mehrfach, mindestens jedoch einmal, in jeweils entgegengesetzter Richtung, durch Schlacke oder einen Rost oder mehrere Roste hindurchgeführt wird.
Hierdurch wird die Temperatur der Verbrennungsluft an der heißen Schlacke der entsprechenden Rostbereiche erhöht und, insbesondere bei gleichzeitig höherer Luftgeschwindigkeit in dem mit Brennstoff versetzten Schlackebett, der Ausbrand stark verbessert.
Der Begriff 'Luftvolumen' bezieht sich auf ein Teilvolumen der durch das Schlackebett oder den Rost strömenden Luft und wird oft auch als 'teilumgesetzte Luft' bezeichnet.

Im Folgenden wird die Hin- und Herbewegung eines Luftvolumens auch als 'pendeln' bezeichnet, da dieser Begriff die oszillierende Bewegung der Luft sehr anschaulich beschreibt.
Eine Vorrichtung, welche in der Lage ist, dieses Verfahren durchzuführen, kann daher im Folgenden auch als 'Pendellufterzeuger' bezeichnet werden, da der Luftstrom gemäß dem Verfahren im Bereich des Schlackebetts hin- und herpendelt.

Selbstverständlich muss für einen optimalen Ausbrand die Luft durch die Schlacke hindurchgeführt werden. Im Allgemeinen befindet sich die Schlacke jedoch auf dem Rost der Verbrennungsanlage und ist nicht Teil der Anlage
selbst. Daher wird im Folgenden der allgemeine Begriff 'Verbrennungsbasis' verwendet. Dieser Begriff entspricht zunächst dem Rost oder einem Teilbereich eines Rosts als Bezugspunkt relativ zur Verbrennungsanlage. In den folgenden Ausführungen kann der Begriff 'Verbrennungsbasis' aber auch als 'Schlacke', 'Schlackebett' oder allgemein als 'Ort, an dem die Schlacke angeordnet ist' verstanden werden.

Erfindungswesentlich für das Verfahren ist dabei, dass dasselbe Luftvolumen aus der Richtung des verbrennungsraumes kommend oder mehrfach durch mindestens eine Verbrennungsbasis geführt wird. 'Mehrfach' bedeutet dabei, dass dieses Luftvolumen mindestens einmal in der einen Richtung und mindestens einmal in der Gegenrichtung durch mindestens eine Verbrennungsbasis geleitet wird, also zum Beispiel eine oszillierende Bewegung oder Pendelbewegung ausführt.
Obwohl es bevorzugt ist, das Luftvolumen mehrfach durch ein und dieselbe Verbrennungsbasis zu leiten, umfasst diese Erfindung auch Ausführungsformen, bei denen dieses Luftvolumen nacheinander durch mehrere verschiedene Verbrennungsbasen geleitet wird. Erfindungswesentlich hierbei ist die mehrfache Verwendung ein und desselben Luftvolumens oder bei mehreren lokal getrennten Hindurchführungen mehrerer Luftvolumina, die jedoch alle eine Hin- und Herbewegung, insbesondere eine Pendelbewegung, ausführen.
Diese wiederholte Zuführung der Luft kann so häufig wiederholt werden, bis der Sauerstoffgehalt in dieser Pendelluft durch den Restbrennstoff unter einen Grenzwert gefallen ist. Dieser Grenzwert liegt bevorzugt bei 17 %, da unter dieser Sauerstoffkonzentration die Verbrennungsgeschwindigkeit stark abnimmt.

In einer bevorzugten Ausführungsform wird das Luftvolumen bei mindestens einer Hindurchführung mit einer anderen Geschwindigkeit als bei einer anderen Hindurchführung durch die Verbrennungsbasis hindurchgeleitet.

In einer weiteren bevorzugten Ausführungsform wird dem Luftvolumen ein Anteil eines anderen Luftvolumens hinzugefügt oder ein Anteil des Luftvolumens durch ein anderes Luftvolumen ersetzt. Insbesondere schließt dieses andere Luftvolumen Frischluft, Sauerstoff und/oder sauerstoffangereicherte Luft mit ein. Auf diese weise kann der Sauerstoffanteil des Gesamtluftvolumens, welches durch die Verbrennungsbasis strömt, geregelt werden.

In einer weiteren bevorzugten Ausführungsform, welche bei mehreren Verbrennungsstellen oder mehreren Unterwindzonen Anwendung findet, wird das Verfahren an mindestens einer der Stellen oder Zonen angewandt.
Zum Beispiel wird die Primärluft in zwei Unterwindzonen, in einer Vorrichtung gemäß Figur 2 z. B. den Unterwindzonen 2.4a und 2.4b, einer Verbrennungsanlage mehrfach in gleicher oder entgegengesetzter Richtung, insbesondere bei Regelung der Temperaturen und Sauerstoffkonzentrationen der teilumgesetzten Luft, durch den Rost geführt. Zur Einstellung der gewünschten Temperaturen und Sauerstoffkonzentrationen kann die Frequenz und die Luftgeschwindigkeit im Rost oder Brennstoffbett (Volumenamplitude) sowie zugeführte Primärluft 2.6 (bzw. Sauerstoff oder sauerstoffangereicherte Luft) genutzt werden.

In dem Fall, dass das Luftvolumen nur durch eine Verbrennungsbasis strömt, wird in der Praxis technisch bedingt der Fall eintreten, dass nicht die komplette Luftsäule durch die Verbrennungsbasis strömt, sondern ein Bruchteil an einer Seite der Verbrennungsbasis in der Pumpe oder den Rohrzuführungen verbleibt. Jedoch ist dies dem Fachmann bekannt. Wichtig ist alleine, dass das durch die Verbrennungsbasis geführte Gesamtvolumen von Luft ein Luftvolumen enthält, welches kurz vorher schon einmal durch die Verbrennungsbasis geströmt ist oder kurz nachher noch einmal durch diese oder eine andere Verbrennungsbasis strömen wird.
Bei der bevorzugten Ausführungsform, bei der ein Luftaustausch zwischen zwei oder mehr Verbrennungsbasen stattfindet, wird zwangsläufig ein Teil des Luftvolumens in den Rohrverbindungen zwischen den beiden Verbrennungsbasen verbleiben. Hier ist es ebenfalls erfindungswesentlich, dass mindestens ein Teilvolumen der Luft mehrfach durch mindestens eine der Verbrennungsbasen hindurchströmt.

Durch die sich aufbauende thermische Schichtung ist die Luft im oberen Bereich der Trichter 2.4a und 2.4b heißer als im unteren Bereich mit dem Zutritt der kalten Primärluft. Die Betriebstemperatur des Pendellufterzeugers liegt damit deutlich tiefer als die Lufttemperatur im Bereich des Rostes.

Eine bevorzugte Ausführungsform des Verfahrens enthält die folgenden Schritte:
a) Hindurchführen von Luft durch mindestens eine Verbrennungsbasis in jeweils einer Richtung,
b) Rückführen der Luft durch diese mindestens eine Verbrennungsbasis und/oder mindestens eine andere Verbrennungsbasis in der jeweils entgegengesetzten Richtung.

Bevorzugt wird in Schritt a) die Luft in Richtung des Verbrennungsraumes eingebracht.
Des Weiteren wird bevorzugt, die Luft durch oszillierendes Anlegen eines Überdrucks und/oder Unterdrucks zu führen. Insbesondere geschieht das Hindurchführen in Schritt a) durch Anlegen eines Überdrucks in der Unterwindzone unter dem betreffenden Rost und das Rückführen durch Anlegen eines Unterdrucks an dieser oder einer entsprechenden anderen Unterwindzone.
In einer bevorzugten Ausführungsform der Vorrichtung enthält diese Einheiten zur Erzeugung eines Über- und/oder Unterdrucks, so dass ein Luftvolumen in der Anlage durch Verbrennungsbasen 'pendeln' kann, und stellt so einen Pendellufterzeuger dar.
Es sei angemerkt, dass es durchaus möglich ist, entweder mit einer Einheit an einer Seite der Verbrennungsbasis zu arbeiten, die in der Lage ist, oszillierend zunächst einen Überdruck und dann einen Unterdruck zu erzeugen, um das Luftvolumen pendeln zu lassen, oder mit zwei Einheiten diesseits und jenseits der Verbrennungsbasis zu arbeiten, welche das Luftvolumen durch oszillierendes Anlegen entweder eines Überdrucks der anderen Einheit zuführen oder eines Unterdrucks von der anderen Einheit abführen. Die beiden Möglichkeiten können auch kombiniert werden.

Für den Fall, dass das Verfahren bei zwei oder mehr verbrennungsbasen angewandt wird, ist es zum einen möglich, dieses Verfahren parallel auszuführen, so dass die Luft durch die Verbrennungsbasen gleichzeitig in der jeweils gleichen Richtung strömt, bevorzugt ist aber auch, dass die Luft wechselseitig strömt, wenn also in einem Teil der Verbrennungsbasen die Luft in den Verbrennungsraum strömt, die Luft durch die übrigen Verbrennungsbasen aus dem Verbrennungsraum hinausströmt.
In einer bevorzugten Vorrichtung besteht zwischen mindestens zwei Verbrennungsbasen eine Rohrverbindung, so dass über mindestens eine Pump- oder Ventilationseinheit mindestens ein Luftvolumen wechselseitig hin- und herpendeln kann, und bevorzugt die Hinführung eines Luftvolumens in einer der Verbrennungsbasen mit der gleichzeitigen Rückführung des selben oder eines anderen Luftvolumens durch eine einzige Pump- oder Ventilationseinheit erreicht wird.
Bevorzugt sind die Unterwindzonen auf diese weise verbunden, so dass die Luft von mindestens einer Verbrennungsbasis in Richtung mindestens einer anderen Verbrennungsbasis gepumpt wird und umgekehrt, die Luft also zwischen verschiedenen Verbrennungsbasen hin- und herpendelt.

In einer bevorzugten Ausführungsform wird eine Vorrichtung mit einem insbesondere geregelten Ventilator für jede Rostzone (hier eine Verbrennungsbasis) verwendet, wobei der Ventilator den Rostzonen zugeordnet ist, die Vorrichtung eine funktionsunterstützende Verrohrung aufweist und ein geeignetes Umschaltventil enthält, welches in der Lage ist, die Verbrennungsluft mehrfach in jeweils entgegengesetzter Richtung durch den Rost oder das Schlackebett zu leiten.

Bevorzugt führt das Umschaltventil die Primärluft in zwei Rostzonen, zum Beispiel in Figur 2 die Rostzonen 2.4a und 2.4b, wiederholt durch das Schlackebett mit Brennstoffresten.

Bei einer weiteren bevorzugten Ausführungsform ist der einer Verbrennungsbasis zugehörige Unterwindtrichter in Quer- und/oder Längsrichtung unterteilt, insbesondere halbiert. Diese Ausführungsform eignet sich insbesondere sehr gut für Verbrennungsbasen (hier insbesondere Verbrennungsroste) mit einer Rostbahn.

Bei einer weiteren Ausführungsform pendelt ein Luftvolumen zwischen mindestens einer Verbrennungsbasis und mindestens zwei anderen Verbrennungsbasen hin und her, so dass sie gleichzeitig durch die mindestens zwei anderen Verbrennungsbasen strömt, z.B. von einer Bahn eines Rostes auf 2 parallel geschaltete Bahnen. Diese Ausführungsform eignet sich besonders gut für Verbrennungsroste mit 3, 5 oder mehr parallel geschalteten Rostbahnen.

In einer bevorzugten Ausführungsform des Verfahrens werden die Sauerstoffkonzentrationen und die Temperaturen in der teilumgesetzten Luft unter dem Rost bestimmt und zur Einstellung der Frequenz der Pendelbewegung des Luftvolumens und der Amplitude der wiederholten Durchleitung der Verbrennungsluft durch die Schlackeschüttung sowie zur Regelung der zugesetzten Primärluft (bzw. Sauerstoff oder sauerstoffangereicherte Luft) genutzt.

Beispiele für das erfindungsgemäße System sind in den Abbildungen dargestellt.
Figur 1 zeigt in Seitenansicht einen Rost des Standes der Technik mit Brennstoffbelegung und fünf Unterwindzonen.
Figur 2 zeigt ein Prinzipbild des Verfahrens und des Pendellufterzeugers.
Figuren 3a und 3b zeigen einen Pendellufterzeuger in dem wechselseitigen Betrieb Belüften/Saugen auf zwei Seiten des Rostes.

In Figur 2 ist ein Prinzipbild zur einfachen Beschreibung des Verfahrens zur Pendellufterzeugung dargestellt. Auf beiden Seiten eines Rostes 2.1a und 2.1b liegt das Schlackebett mit Brennstoffresten 2.2. Durch den Rost 2.1a und 2.2b und das Schlackebett 2.2 strömt Verbrennungsluft 2.3 auf und ab und erhitzt sich dabei an der Schlacke 2.2. Die Verbrennungsluft 2.3 wird über den Unterwindraum 2.4a und 2.4b und die Verrohrung 2.7 über den Kolben 2.9 der Luftpumpvorrichtung 2.8 durch die Schlackeschicht 2.2 gesaugt und gedrückt. Im Unterwindraum 2.4a und 2.4b sind Temperatur- und Sauerstoffmessungen 2.5a und 2.5b über der Zuführung der Pendelluft und Primärluft installiert. Die dort gemessene Temperatur liegt wegen der thermischen Schichtung deutlich unter der Lufttemperatur im Bereich des Rostes. Die Rostasche wird über die Öffnungen 2.10a und 2.10b gasdicht abgefördert.

In Figur 2 wird gezeigt, dass vergleichsweise wenig kalte Primärluft (bzw. Sauerstoff oder sauerstoffangereicherte Luft) 2.6 durch die dort dargestellte Pumpvorrichtung einem großen Volumenstrom an Verbrennungsluft zugemischt und wiederholt durch den Rost 2.1a und 2.1b und die Schlacke 2.2 gefördert wird. Über die Temperatur- und Sauerstoffmessung 2.5a und 2.5b werden die Lufttemperaturen unter dem Rost ermittelt. Über die Frequenz, die Amplitude und die Luftzufuhr kann die gewünschte Temperatur eingestellt werden. Durch die Messung der Sauerstoffkonzentration wird diese überwacht und über die Primärluftzufuhr (bzw. Sauerstoff oder sauerstoffangereicherte Luft) 2.6 ebenfalls eingestellt.

Dieses Verfahren macht sich die Tatsache zunutze, dass es für die Verbrennung von Brennstoffresten in der Schlacke unerheblich ist, ob die Verbrennungsluft von unten oder oben zugeführt wird. Wichtig ist, dass der konvektive Stoff- und Wärmeübergang durch eine ausreichend hohe Luftgeschwindigkeit beschleunigt wird. Zusätzlich wird die Umsetzung des Restbrennstoffes dadurch beschleunigt, dass sich die Luft an der heißen Schlacke erwärmt und damit den Umsatz beschleunigt.

Durch die Zufuhr von Primärluft 6 in den beschriebenen Rostbereich kann der mittlere Sauerstoffgehalt eingestellt werden. Die Lufttemperatur der Mischung aus Pendelluft und Primärluft 3.6 steigt durch die wiederholte Durchführung durch die Schlacke an, da die Schlacke heiß ist. Somit kann die Temperatur der Mischung aus Pendelluft und Primärluft auf Grund der erhöhten Schlacketemperatur annähernd auf die Temperatur der durchströmten Schlacke ansteigen. Hierdurch wird die Luft optimal im Querstrom erwärmt. Neben dem besseren Ausbrand wird durch den höheren konvektiven Wärmeübergang die Schlacke besser gekühlt und damit der Feuerungswirkungsgrad erhöht.

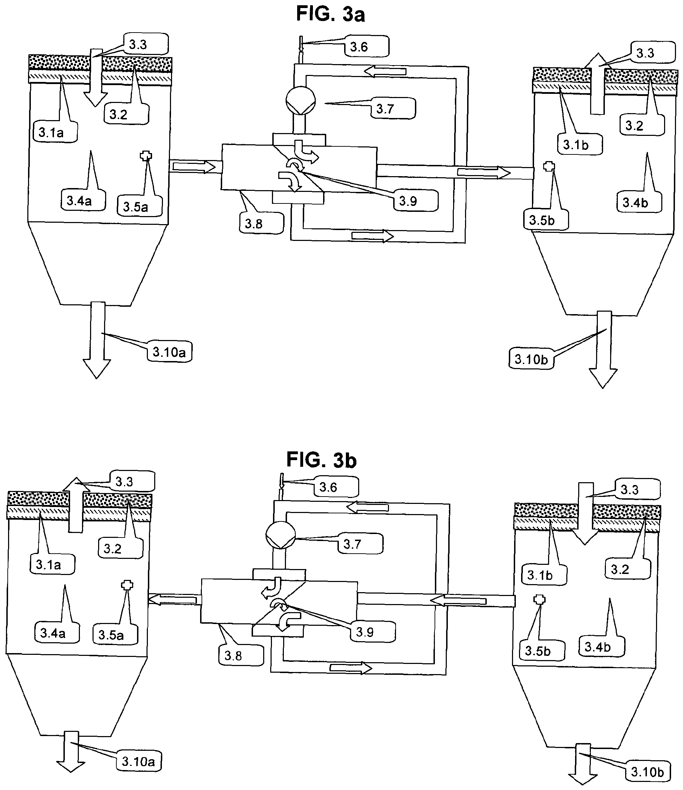

In den Figuren 3a und 3b ist die Prinzipskizze der Figur 2 in einer technisch realisierbaren Form dargestellt. Die Beschriftungen wurden weitgehend analog der Beschriftung der Figur 2 gewählt. Hinsichtlich der Funktion hat sich gegenüber der Figur 2 nichts geändert. Anstelle der Luftpumpe, des Pendellufterzeugers, wurde ein Ventilator 3.7 mit einem Umschaltventil 3.8 installiert. Durch die Stellung der Klappe 3.9 in dem Umschaltventil kann wahlweise die Luft über der Rostzone 3a oder 3b angesaugt werden.

### Bezugszeichenliste

- 1.1: Brennstoff
- 1.2: Brennstoffbett
- 1.3a-e: Rostzonen 1-5
- 1.4a-e: Unterwindzonen 1-5
- 1.5: Schlackenabwurf
- 1.6a-e: Primärluft Zonen 1-5

- 2.1a,b: Rostseite a bzw. b
- 2.2: Schlackebett mit Brennstoffresten
- 2.3: Verbrennungsluft, mit z. B. 200°C
- 2.4a,b: Unterwindraum a bzw. b
- 2.5a,b: Temperatur- und Sauerstoffmessung Seite a bzw. b
- 2.6: Primärluft der zugeordneten Rostzone, mit z. B 20 °C
- 2.7: Verrohrung
- 2.8: Luftpumpvorrichtung
- 2.9: Pumpenkolben
- 2.10a,b: Gasdichter Rostascheabzug Seite a bzw. b

- 3.1a,b: Rostseite a bzw. b
- 3.2: Schlackebett mit Brennstoffresten
- 3.3: Verbrennungsluft, mit z. B. 200°C
- 3.4a,b: Unterwindraum a bzw. b
- 3.5a,b: Temperatur- und Sauerstoffmessung Seite a bzw. b
- 3.6: Primärluft der zugeordneten Rostzone, mit z. B 20 °C
- 3.7: Ventilator
- 3.8: Ventilgehäuse
- 3.9: ventilklappe
- 3.10a,b: Gasdichter Rostascheabzug Seite a bzw. b

## Patentansprüche

1. Verfahren zur Steigerung des Ausbrandes von Schlacken auf mindestens einer Verbrennungsbasis, **dadurch gekennzeichnet, dass** mindestens ein Luftvolumen aus der Richtung des Verbrennungsraumes kommend mehrfach, mindestens jedoch einmal, in jeweils entgegengesetzter Richtung im Bereich des Schlackebetts durch mindestens eine Verbrennungsbasis hindurchgeführt wird, wobei das Luftvolumen eine Pendelbewegung ausführt.

2. Verfahren nach Anspruch 1, **dadurch gekennzeichnet, dass** das Luftvolumen so oft durch die Verbrennungsbasis hindurchgeführt wird oder das Verfahren so oft wiederholt wird, bis der dort gemessene Sauerstoffgehalt unter einen Grenzwert, insbesondere unter 17 Vol.-% gefallen ist.

3. Verfahren nach einem der vorangehenden Ansprüche, **dadurch gekennzeichnet, dass** das Luftvolumen bei mindestens einer Hindurchführung mit einer anderen Geschwindigkeit als bei einer anderen Hindurchführung durch die Verbrennungsbasis hindurchgeleitet wird.

4. Verfahren nach einem der vorangehenden Ansprüche, **dadurch gekennzeichnet, dass** dem Luftvolumen ein Anteil eines anderen Luftvolumens hinzugefügt oder ein Anteil des Luftvolumens durch ein anderes Luftvolumen ersetzt wird, wobei dieses andere Luftvolumen insbesondere Frischluft, reinen Sauerstoff und/oder sauerstoffangereicherte Luft enthält.

5. Verfahren nach einem der vorangehenden Ansprüche, **dadurch gekennzeichnet, dass** das Verfahren die folgenden Schritte aufweist:
a) Hindurchführen von Luft durch mindestens eine Verbrennungsbasis in jeweils einer Richtung,
b) Rückführen der Luft durch diese mindestens eine Verbrennungsbasis und/oder mindestens eine andere Verbrennungsbasis in der jeweils entgegengesetzten Richtung,
wobei bevorzugt in Schritt a) die Luft in Richtung des Verbrennungsraumes eingebracht wird, und insbesondere die Luft durch Anlegen eines Über- oder Unterdrucks geführt wird.

6. Verfahren nach einem der vorangehenden Ansprüche, **dadurch gekennzeichnet, dass** mindestens ein Luftvolumen durch zwei oder mehr Verbrennungsbasen gleichzeitig in der jeweils gleichen Richtung oder in jeweils unterschiedlicher Richtung pendelt.

7. Vorrichtung zur Ausführung eines Verfahrens nach einem der vorangehenden Ansprüche, welche mindestens eine Verbrennungsbasis umfasst, **dadurch gekennzeichnet, dass** die Vorrichtung mindestens eine Einheit zur Erzeugung eines Über- und/ oder Unterdrucks enthält und so gestaltet ist, dass ein Luftvolumen in der Anlage im Bereich des Schlackebetts durch Verbrennungsbasen hin- und herpendeln kann.

8. Vorrichtung nach Anspruch 7, **dadurch gekennzeichnet, dass** zwischen mindestens zwei Verbrennungsbasen eine Rohrverbindung besteht, so dass über mindestens eine Einheit zur Erzeugung eines Über- und/oder Unterdrucks, insbesondere mindestens eine Pump- oder Ventilationseinheit, bevorzugt einen geregelten Ventilator, mindestens ein Luftvolumen wechselseitig hin- und herpendeln kann, und bevorzugt die Hinführung eines Luftvolumens in einer der Verbrennungsbasen mit der gleichzeitigen Rückführung des selben oder eines anderen Luftvolumens durch eine einzige Pump- oder Ventilationseinheit erreicht wird.

9. Vorrichtung nach Anspruch 7 oder 8, **dadurch gekennzeichnet, dass** jede Pump- oder Ventilationseinheit einer Verbrennungsbasis oder zwei Verbrennungsbasen zugeordnet ist, die Vorrichtung eine funktionsunterstützende Verrohrung aufweist und ein geeignetes Umschaltventil enthält, welches in der Lage ist, die Verbrennungsluft mehrfach in jeweils entgegengesetzter Richtung durch die Verbrennungsbasis, vorzugsweise einen Rost oder ein Schlackebett, zu leiten.

## Claims

1. A method for increasing the burnout of slags on at least one combustion base, **characterized in that** at least one volume of air, coming from the direction of the combustion chamber, is passed one or more times, but at least once, each time in the opposite direction, in the region of the slag bed through at least one combustion base, said volume of air performing an oscillating motion.

2. The method according to claim 1, **characterized in that** the volume of air is passed repeatedly through the combustion base, or the process is repeated, until the oxygen content measured in the combustion base drops below a threshold value, in particular below 17 vol%.

3. The method according to any one of the preceding claims, **characterized in that** the volume of air, at least in the case of one passage thereof through said combustion base, is passed through said combustion base at a different rate than in the case of another passage thereof.

4. The method according to any one of the preceding claims, **characterized in that** to said volume of air there is added a portion of another volume of air, or a portion of said volume of air is replaced by another volume of air, said other volume of air containing, in particular, fresh air, pure oxygen and/or oxygen-enriched air.

5. The method according to any one of the preceding claims, **characterized in that** said method comprises the steps of:
a) passing air through at least one combustion base, in each case in one direction,
b) returning the air through said at least one combustion base and/or at least one other combustion base, in the respective opposite direction,
wherein, preferably in step a), the air is introduced in the direction of the combustion chamber, and, in particular, the air is conveyed by applying a positive or negative pressure.

6. The method according to any one of the preceding claims, **characterized in that** at least one volume of air simultaneously oscillates through two or more combustion bases, in the respective same direction or in respective different directions.

7. A device for carrying out a method according to any one of the preceding claims, said device comprising at least one combustion base, **characterized in that** the device contains at least one unit for generating a positive pressure and/or negative pressure, and **in that** the device is designed such that a volume of air the system can oscillate to and fro through combustion bases, in the area of the slag bed.

8. The device according to claim 7, **characterized in that** a pipe connection is provided between at least two combustion bases, such that by means of at least one unit for generating a positive and/or negative pressure, in particular at least one pump unit or ventilation unit, preferably a closed-loop controlled compressor, at least one volume of air can reciprocally oscillate, and such that preferably the forward passage of a volume of air in one of the combustion bases is accomplished together with the simultaneous return passage of the same or of another volume of air by a single pump unit or ventilation unit.

9. The device according to claim 7 or 8, **characterized in that** each pump unit or ventilation unit is associated with one combustion base or with two combustion bases; the device has a piping serving the function thereof and includes a suitable reversing valve which is capable of repeatedly conducting the combustion air, each time in the opposite direction, through the combustion base, preferably a grate or a slag bed.

## Revendications

1. Procédé d'amélioration de la combustion de scories sur au moins une base de combustion, **caractérisé en ce qu'**au moins un volume d'air en provenance de la chambre de combustion est guidé plusieurs fois, et en tout cas au moins une fois, dans la région du lit de scories dans la direction respectivement opposée à travers au moins une base de combustion, dans lequel le volume d'air décrit un mouvement de va-et-vient.

2. Procédé selon la revendication 1, **caractérisé en ce que** le volume d'air est guidé à travers la base de combustion, ou le procédé est répété, jusqu'à ce que la teneur en oxygène qui est mesurée tombe en dessous d'une valeur limite, en particulier en dessous de 17 % en volume.

3. Procédé selon l'une quelconque des revendications précédentes, **caractérisé en ce que** le volume d'air est dirigé à travers la base de combustion lors d'au moins un guidage traversant avec une autre vitesse que lors d'un autre guidage traversant.

4. Procédé selon l'une quelconque des revendications précédentes, **caractérisé en ce qu'**une partie d'un autre volume d'air est ajouté au volume d'air, ou une partie du volume d'air est remplacée par un autre volume d'air, dans lequel ledit autre volume d'air contient en particulier de l'air frais, de l'oxygène pur et/ou de l'air enrichi en oxygène.

5. Procédé selon l'une quelconque des revendications précédentes, **caractérisé en ce que** le procédé présente les étapes ci-dessous consistant à :
a) guider de l'air à travers au moins une base de combustion et/ou une autre base de combustion dans respectivement une direction,
b) récupérer l'air à travers ladite au moins une base de combustion et/ou au moins une autre base de combustion dans la direction respectivement opposée,
dans lequel, de manière préférée à l'étape a), l'air est introduit en direction de la chambre de combustion, et l'air est en particulier guidé grâce à l'application d'une surpression ou d'une dépression.

6. Procédé selon l'une quelconque des revendications précédentes, **caractérisé en ce qu'**au moins un volume d'air va et vient à travers deux ou plus de deux bases de combustion simultanément dans la même direction respective ou dans une direction respectivement différente.

7. Dispositif de mise en oeuvre d'un procédé selon l'une quelconque des revendications précédentes, qui comprend au moins une base de combustion, **caractérisé en ce que** le dispositif contient au moins une unité destinée à produire une surpression et/ou une dépression et est conçu de telle manière qu'un volume d'air présent dans l'installation peut aller et venir dans la région du lit de scories à travers des bases de combustion.

8. Dispositif selon la revendication 7, **caractérisé en ce qu'**entre au moins deux bases de combustion se trouve un raccord tubulaire, de telle manière qu'au moins un volume d'air peut aller et venir dans les deux sens par l'intermédiaire d'au moins une unité destinée à produire une surpression et/ou une dépression, en particulier au moins une unité de pompage ou de ventilation, de manière préférée un ventilateur régulé, et le guidage d'un volume d'air dans une des bases de combustion avec la récupération simultanée du même volume d'air ou d'un autre volume d'air est atteint de manière préférée grâce à une unité de pompage ou de ventilation unique.

9. Dispositif selon la revendication 7 ou 8, **caractérisé en ce que** chaque unité de pompage ou de ventilation est associée à une base de combustion ou à deux bases de combustion, le dispositif présente une tuyauterie servant à assurer le fonctionnement et contient une vanne d'inversion appropriée qui est en mesure de diriger l'air de combustion plusieurs fois dans une direction respectivement opposée à travers la base de combustion, de manière préférée une grille ou un lit de scories.
